# EUROPEAN PATENT SPECIFICATION

(11) **EP 4 101 124 B1**
(45) Date of publication and mention of the grant of the patent: **07.10.2026**
(21) Application number: 21701099.0
(22) Date of filing: 19.01.2021
(51) Int. Cl.: H04L 12/18, H04W 4/06

(54) **OPTIMIZATION OF 5G MBMS/5MBS DATA DELIVERY OVER AN N3 INTERFACE**
OPTIMIERUNG VON 5G MBMS/5MBS-DATENLIEFERUNG ÜBER EINE N3-SCHNITTSTELLE
OPTIMISATION DE DISTRIBUTION DE DONNÉES MBS/5MBS 5G SUR UNE INTERFACE N3

(30) Priority: 07.02.2020 US 202062971794 P
(43) Date of publication of application: 14.12.2022
(73) Proprietor: Nokia Technologies Oy, 02610 Espoo (FI)
(72) Inventor: GODIN, Philippe, 78000 Versailles (FR); THIEBAUT, Laurent, 92160 Antony (FR); CASATI, Alessio, Surrey KT8 1NT (GB)
(74) Representative: Page White Farrer
(86) International application number: PCT/EP2021/050981
(87) International publication number: WO 2021/156046

(56) References cited:
- WO-A1-2019/114938
- WO-A1-2019/114939
- US-A1- 2019 158 985
- DAVID VARGAS ET AL: "RAN Logical Architecture and Interfaces for 5G-Xcast", 28 February 2019 (2019-02-28), pages 1 - 95, XP055646813, Retrieved from the Internet <URL:http://5g-xcast.eu/wp-content/uploads/2019/03/5G-Xcast_D3.3_v2.0_web.pdf> [retrieved on 20191127]

## Description

### Field

The subject matter described herein relates to broadcast, multicast.

### Background

In the Third Generation Partnership Project (3GPP), Multimedia Broadcast Multicast Service (MBMS, which may also refer to 5G multicast, broadcast also called 5MBS in the context of 5G system)) can be used to provide content via a service that broadcasts and multicasts the content via cellular. The broadcast, multicast transmission may be provided over one or more cells to one or more user equipment (UE). For example, the cellular network may provide mobile television content to a user equipment using for example a multicast, broadcast single-frequency network (MBSFN) in which base stations transmit on the same frequency in a coordinated way to provide the television content as MBMS/5MBS or the cellular network may provide the same content to a group of users such as public safety personnel dealing with an emergency. International publication no. WO 2019/114939 relates to multicast session management in a 5G communication network.

### Summary

The invention describes an apparatus for a communication network according to independent claim 1, an access network node according to independent claim 4, a method of a session management function of a communication network according to independent claim 8, a method of an access network node of a communication network according to independent claim 11 and corresponding computer programs claims 15 and 16.

Additional aspects of the invention are described in the dependent claims.

### Description of Drawings

In the drawings,
FIG. 1 depicts an example of a process for optimization of multicast, broadcast delivery, in accordance with some example embodiments;
FIG. 2 depicts another example of a process for optimization of multicast, broadcast delivery, in accordance with some example embodiments;
FIG. 3 depicts an example of a process for optimization of multicast, broadcast delivery, in accordance with some example embodiments.
FIG. 4 depicts an example of a network node, in accordance with some example embodiments; and
FIG. 5 depicts an example of an apparatus, in accordance with some example embodiments.

Like labels are used to refer to same or similar items in the drawings.

### Detailed Description

With respect to a broadcast, multicast, such as a multimedia broadcast multicast service (MBMS), the delivery of MBMS may be done over wireless by a base station, such as a 5G gNB type base station (also referred to as a next generation radio access (NG RAN)) node. This delivery may be over dedicated radio bearers or single cell point to multipoint mode (SC-PTM). In 4G for example, an MBMS dedicated architecture (which includes for example M1, M2, and M3 interfaces) is provided to deliver the MBMS data to the base station. In 5G however, a unicast architecture is reused for the base station to receive the data of the MBMS service. As such, there is no specific M1 interface and no specific connected MBMS gateway as is the case in 4G. Instead, the MBMS data may be sent to the base station, such as the NG-RAN node, from a user plane function (UPF) over a tunnel (e.g., a GPRS Tunneling Protocol (GTP)) via the N3 interface (which is the interface between the UPF and the base station).

Although some of the examples refer to MBMS including 5G MBS, the examples disclosed herein may be applied to other multicast, broadcast services as well. And although some of the examples refer to a 5G radio access network, other types of access networks including a wired access network may be used as well. For example, a wireline access network, such as the wired access gateway function (e.g., W-AGF as defined in 3GPP TS 23.316 or AGF per the Broadband Forum specifications WT-456 / WT-470) may be used as well.

When a user equipment (UE) first requests an MBMS service over a particular Data Network Name (DNN), the UE may already have a first protocol data unit (PDU) session "1" ongoing towards that DNN through a first UPF, and this first PDU session may be managed by a first Access and Mobility Management Function (AMF1) and a first Session Management Function (SMF1), with all these nodes selected to be compatible for the MBMS request. At some point in time, the UE may request to join an MBMS service 1 (MS1) either via the control plane or the user plane. If the joining happens via the user plane, the UE may send an IETF Internet Group Management Protocol (IGMP) or IETF Multicast Listener Discovery (MLD) message to the first UPF associated with PDU session 1, and this first UPF may also involve the first SMF to carry on the request. If the joining happens via the control plane, the UE may send the request to join MBMS service to the first SMF, which in turn will involve the first UPF for the delivery. As part of this joining process, an N2 message (which is a message sent via the N2 interface) may be sent by the first AMF 1 and/or the first SMF to the 5G AN (e.g., NG-RAN node or any other type of access node or base station) to trigger the setup of a tunnel, such as an N3 GTP tunnel (between first UPF and the NG-RAN node). And, this tunnel may carry the MBMS data.

The issue comes from the fact that the core network (CN) node used for delivering the MBMS data is the same first UPF already serving the relevant DNN of the first PDU session 1 for a particular UE. As such, if another, second UE (which is located in the same base station (or coverage region)) wants to also receive the same MBMS service, the second UE may request the MBMS in the same way as noted above with respect to the first UE. But because it is likely that the legacy PDU session 2 for the second UE towards this DNN is served by another, second UPF of the region, the MBMS data for second UE may be sent over from a second UPF.

Given a plurality of UEs in the same base station (or coverage region) wanting to receive the same MBMS service, multiple UPFs (which may be associated with these UEs) may deliver the same MBMS data over N3 to the base station. Since several UPFs are involved, each of these UPFs may send this same MBMS data over a separate N3 GTP tunnel to base station. The base station, such as the NG-RAN node, may therefore receive the same MBMS data over multiple redundant N3 tunnels from the different UPFs. This redundancy creates wasteful data overhead and overhead for the signaling (e.g., considering the above phases to setup all these individual N3 tunnels). As such, the subject matter disclosed herein may provide another mechanism especially targeting the case where the multicast content is to be received by many users served by many UPFs and/or 5G AN entities.

When a 5G AN entity, such as an NG-RAN node, receives a request concerning an MBMS service (which may be received via the N2 interface between the 5G AN and AMF), this request may be received with information, such as (1) multicast addressing information (e.g., a source IP address, an IP multicast address, and the like) and/or (2) an identifier of the MBMS service and (3) an identifier of the UE context and/or UE PDU session 1. This information may be stored by the 5G AN entity, such as the NG-RAN. The 5G AN entity, such as the NG-RAN, may use the multicast addressing information to join the MBMS service. The source IP address identifies the address of the entity selected by the SMF to provide the multicast content to 5G AN, and the IP multicast address identifies the MBMS service that the UE has joined.

In some example embodiments, the multicast addressing information may be associated with a single, specific UPF "x" that is in charge of delivering the MBMS data for some, if not all UEs, receiving the MBMS service in a region for the base station. This specific UPF may be identified by its IP address (e.g., source IP of the UPF "x").

In some example embodiments, the multicast addressing information may be associated with a first router (which is configured to IP multicast, "IP multicast router") associated with the delivery of the MBMS service. This specific first router may be identified by its IP address (e.g., source IP of the router). The N2 request (which may be sent by the SMF via the AMF towards the 5G AN) may include an identifier pointing to the PDU session 1 of the first UE. When a second UE tries to join the same MBMS service, a similar mechanism may be applied to join. But for this second UE, the 5G AN may determine that it has already has joined the multicast delivery tree for the MBMS service. The 5G AN may make this determination from information received from the core network, such as the information received in the N2 request (e.g., the received identifier of the MBMS service and/or received multicast addressing information). The N2 request may also include an identifier pointing to the PDU session 2 of the second UE to make the binding to the data service of this second UE.

In some example embodiments, more than one multicast addressing information (e.g., source IP, IP multicast address, etc.) may be received, so that more than one UPF (or IP multicast router) may be used for the delivery of MBMS data via the multicast to avoid a single point of failure. For example, the plurality of UPFs or IP multicast routers may be used to provide a hot standby to provide redundancy and increase availability.

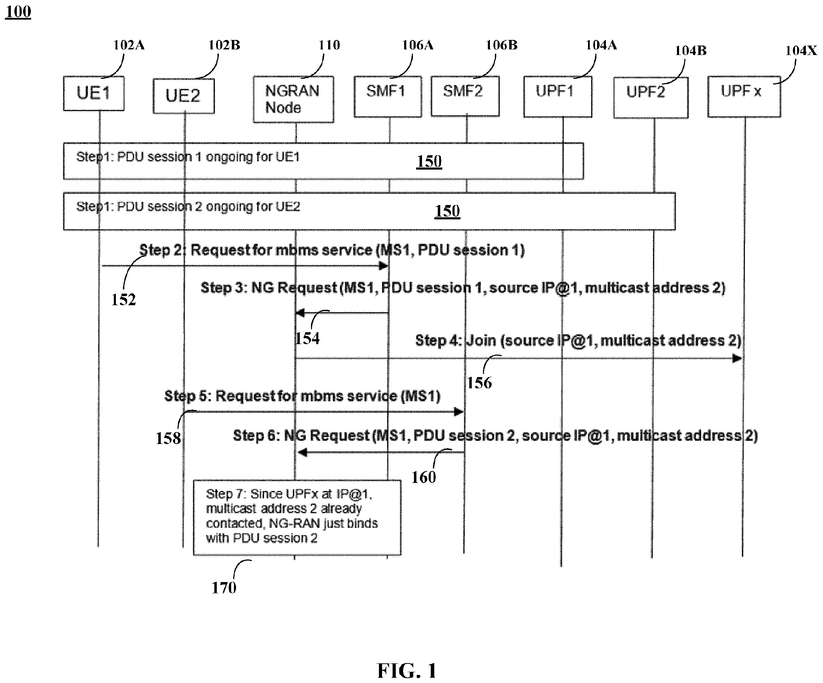

FIG. 1 depicts an example of two UEs 102A-B involved in a service, such as an MBMS service.

At 150, the first UE 102A (labeled UE1) has a first PDU session (labeled PDU session 1) involving the first UPF 104A (labeled UPF1), while the second UE 102B (labeled UE2) has a second PDU session (labeled PDU session 2) involving a second UPF (labeled UPF2) 104B.

At 152, the first UE 102A may request, via the control plane, to receive the MBMS service identified by MS1(which in this example is the "identifier" for the MBMS service). Alternatively, the first UE 102A may request, via the user plane, the MBMS service for MS1 (e.g., via IETF defined protocols such as IGMP / MLD towards UPF1 which will in turn contact SMF1). In other words, the UE indicates at 152 its willingness to receive some multicast traffic, such as the MBMS service MS1. The information sent at 152 may sent directly by the UE to the SMF via NAS signaling or be sent by the UE in the user plane (e.g., IETF IGMP/MLD), intercepted by the UPF and reported to the SMF, which selects a UPF that will act as the source of the multicast traffic inside the operator's network.

At 154, the first SMF 106A (labeled SMF1) may send, to the 5G AN 110 (labeled the NG RAN node), an N2 request concerning UE 102A. This N2 request (which is a message sent via the N2 interface via the AMF) may include the identifier of the service MS1, the bound PDU session 1, multicast addressing information, and/or identifier of the context for UE 102A. The multicast addressing information (e.g. source IP address, IP multicast address, etc) may (1) identify the MBMS service content to be joined by the 5G AN and (2) point to a specific UPF "x" 104X involved in the distribution of the MBMS service MS1 and/or multicast router.

The source IP address (labelled "source IP@1" at FIG. 1) corresponds to the N3 address of the entity selected by the SMF to deliver the content to 5G AN(s) over N3; this address may only provided if Source Specific Multicast (SSM, see e.g. IETF RFC 4604) applies on the N3 interface of the operator. The IP multicast address (labelled "multicast address 2" at FIG. 1) refers to the IP multicast address used to multicast the data content over N3. This IP multicast address may be different from the IP multicast address whose associated content the UE has asked to receive as part of the multicast service. This possibility of using different IP multicast addresses over N3 (internal addressing space of the operator) and over N6 (addressing space seen by UE) allows operators to isolate their N3 addressing domain from the addressing domain known by the UE(s). Furthermore, in case of multicast of non-IP content (e.g., Ethernet), the N2 request from SMF to 5G AN may refer to a N3 IP multicast address while the 5MBS service content may not refer to an IP multicast address.

In the example of FIG. 1, the UPF 104X is a UPF selected for the distribution of the MBMS service MS1. The UPF X 104X may be comprised in or comprise UPF 1 104A or any other UPF corresponding to, for example, a PDU session of another UE that has already requested to receive the same MBMS service.

In other words, the SMF 106A (at 154) indicates over the N2 interface to the 5G AN 110 serving the UE 102A that this UE is to be associated with the multicast traffic delivery (this reuses the N2 signaling delivery to the 5G AN via the AMF). This N2 signaling may be sent via an N2/NGAP association dedicated to the UE. NGAP refers to the NG Application Protocol, found on the N2 reference point between the 5G AN and the AMF to support both UE and non UE associated services.

At 156, the 5G AN 110 may determine that it has not yet subscribed to receiving the data of MS1 service. As such, the 5G AN may use the received multicast addressing information to join the delivery of MBMS service MS1 data from UPF X 104A. At the same time, the 5G AN may bind this delivery with the PDU session 1.

At 158, the second UE 102B may send, via the control plane, a request to SMF 106B to receive the MBMS service MS1. Alternatively, the second UE may send a request, via the user plane, to the second UPF 104B to receive the MBMS service MS1. For example, the user plane request may be in accordance with IETF IGMP / MLD and sent towards second UPF 104B, which in turn contact the second SMF 106B.

In response to the second UE's 102B request for the MBMS service, the second SMF 106B may send, at 160, the N2 request to the 5G AN 110. This N2 request on behalf of the second UE may include the identifier of the MBMS service MS1, the bound PDU session 2, and the multicast addressing information (e.g. source IP of UPF1 104A, IP multicast address of UPF X 104X, etc. identifying the MBMS content to be joined and pointing to a UPF X 104X involved in the distribution of the MBMS service MS1).

At 170, the 5G AN 110 may determine that it has already subscribed to receiving the MBMS data of MS1 service and, as such, the 5G AN does not use the multicast addressing information to join the delivery of MBMS data from UPF X 104A.

The 5G AN binds the MBMS MS1 service delivery with the PDU session 2. Furthermore when the 5G AN is a NG RAN (where the access technology supports multicast/broadcast towards the UE), the NG RAN may take decisions related to the transfer the multicast content over the radio; the NG RAN may decide to send the multicast content on the same set of radio bearers (which may, for example, be dedicated to a UE) than the rest of the traffic of the PDU session of the second UE2 or to create some radio bearer dedicated to the multicast content and targeting some if not all UE(s) in the cell that have requested to and been authorized to receive the multicast content.

In some implementations of the process at FIG. 1, the redundant delivery of the same data over multiple N3 tunnels is reduced if not eliminated.

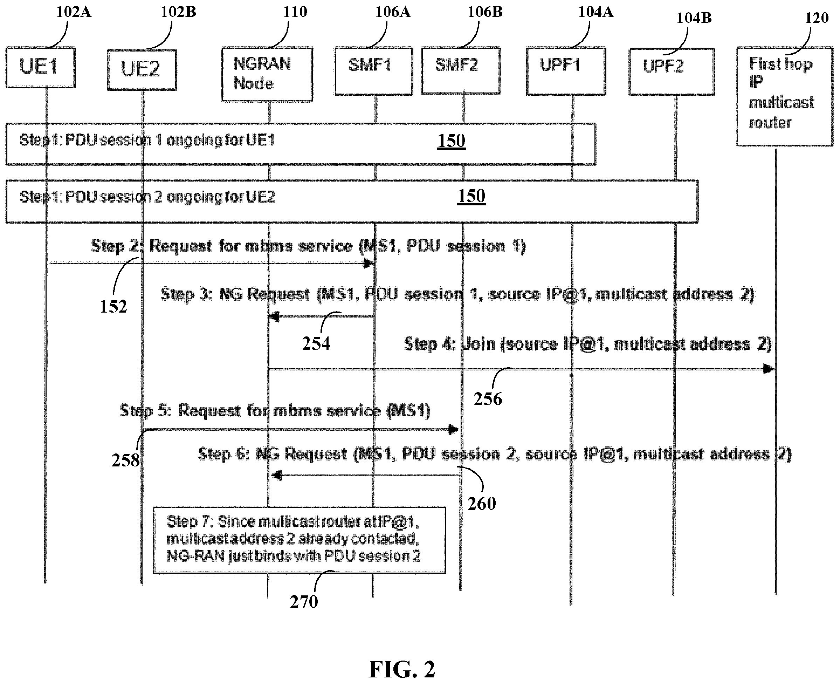

FIG. 2 is similar to FIG. 1 in some respects but rather than the UPF X 104A shown at FIG. 1, FIG. 2 includes another core network node, such as a first router (which is configured as an IP multicast, "IP multicast router") 120.

At FIG. 2, 150-152 may proceed as noted above.

At 254, the first SMF 106A (labeled SMF1) may send, to the 5G AN 110 (labeled the NG RAN node), an N2 request concerning UE 102A. This N2 request may include the identifier of the service MS1, and/or the identifier of context for UE 102A and/or the bound PDU session 1, multicast addressing information (e.g. source IP address, IP multicast address, etc) (1) identifying the MBMS service content to be joined and (2) pointing to the first router 120 involved in the distribution of the MBMS service MS1.

At 256, the 5G AN 110 may determine that it has not yet subscribed to receiving the data of the MBMS service MS1. As such, the 5G AN 110 may use the received multicast addressing information to join the delivery of data from the first router 120. At 256, the 5G AN 110 may also bind this delivery with the first PDU session 1. Given the first UE is willing to receive the multicast traffic served by the 5G AN, the 5G AN may determine that it has not yet joined the IP multicast delivery tree established inside the network (e.g., one or more routers, such as the first router 120 configured to deliver the multicast traffic). As such, the 5G AN uses the received multicast addressing information to join this tree. The joining operation is handled either by one backbone multicast capable router 120 or if this the first 5G AN joining the tree by the UPF 104A itself. For example, when N3 backbone routers receive a join, the router(s) check whether they have themselves joined the N3 multicast distribution tree. If that is the case, the router(s) add the source of the join request to the multicast distribution. Otherwise, the router(s) transfer the joining request to another router which is closer to the source of the multicast distribution tree (e.g., source address of UPF 104A). If it is not the first UE willing to receive the multicast traffic (which is served by the 5G AN), the 5G AN may skip 256.

At 258, the second UE 102B may send, via the control plane, a request to SMF 106B to receive the MBMS service MS1. Alternatively, the second UE may send a request, via the user plane, to the second UPF 104B to receive the MBMS service MS1. As noted, the user plane request may be in accordance with IETF IGMP / MLD and may be sent towards second UPF 104B, which in turn contact the second SMF 106B.

In response to the second UE's 102B request for the MBMS service, the second SMF 106B may send, at 260, the N2 request to the 5G AN (e.g. base station) 110. This N2 request on behalf of the second UE may include the identifier of the MBMS service MS1, and/or an identifier of UE 102B context and/or the bound PDU session 2, and the multicast addressing information (e.g. source IP of UPF1 104A, IP multicast address of router 120, etc. identifying the MBMS content to be joined and pointing to the first router 120 involved in the distribution of the MBMS service MS1).

In some embodiments, at least one router, such as router 120, may be included in the operator's network and may be configured to support IP multicast (e.g., IGMP/ Multicast Listener Discovery, MLD). For example, the router 120 may be a backbone multicast capable router. The 5G AN (which starts serving a UE willing to receive the multicast traffic) may issue signaling (e.g., IGMP/MLD signaling) to join the multicast delivery tree established inside the operator's network at router 120 to deliver the multicast traffic. If the UPF is connected to for example 5 such backbone multicast capable routers (each of which may connect 20 5G AN (e.g. NG RAN) nodes involved in the delivery of a multicast service for example), with the usage of point to point GTP-u tunnels per UPF - 5G AN node, the UPF may need to replicate the traffic 100 times, for example, as the multicast content is to be delivered to 100 5G AN nodes. With some of the mechanisms described herein which rely in part on IP multicasting over N3, the UPF may need to replicate only the multicast traffic 5 times (once per backbone multicast capable routers) and each of the 5 backbone multicast capable routers may only replicate the multicast traffic 20 times (once per 5G AN node it connects), for example. As such, some of the mechanisms disclosed herein may reduce the replication related load on the UPF as well as the induced throughput on the transmission links connecting the UPF. Moreover, as it allows to relate the multicast service delivery to PDU sessions serving also non multicast traffic, some of the mechanisms discloses herein may also provide the NG RAN with flexibility to deliver the multicast content over the radio (either in point to point mode or in point to multipoint mode using e.g. SC-PTM as described herein).

At 270, the 5G AN (e.g. base station, etc.) 110 may determine that it has already subscribed to receiving the data of MS1 service and therefore does not use the multicast addressing information to join the delivery of data from the first router 120. Instead, the 5G AN 110 binds the MBMS/5MBS MS1 service delivery with the PDU session 2. The binding may enable a) sending the traffic in point to point mode with the rest of the traffic of the PDU session when the AN technology or the radio conditions do not allow or favor a multicast transfer of the multicast content over the access link (e.g. 5G radio) with the UE and may enable b) stopping transmitting the multicast content to the UE when the PDU session has been released.

In some implementations of the processes at FIGs. 1 and/or 2, the redundant delivery of the same MBMS data over multiple N3 tunnels is reduced if not eliminated.

As noted, the MBMS data may be provided to the 5G AN (e.g. base station) over a dedicated QoS flow. For example, the MBMS data of an MBMS service MB1 may be delivered from a UPF over a dedicated QoS flow run over a GTP tunnel associated to the PDU session of each UE interested in MBMS service MB1. When this is the case, the SMF may add this QoS flow to the particular PDU session via signalling. The 5G AN (e.g. base station) may map this new QoS flow onto a radio bearer for the UE. If the SC-PTM has been configured in a cell (being served by the base station where the UE is located), only one of the QoS flows may be mapped onto that SC-PTM radio delivery. The N3 delivery may be duplicated for MB1 over multiple QoS flows corresponding to different UEs, even when served by the same 5G AN. However, this approach is based on N3-tunnel delivery so multiple N3 tunnels are used to deliver the same MBMS data of MB1 over the N3 interface for a given NG-RAN node (which as noted may cause a wasteful duplication of resources).

In some example embodiments, the MBMS data may be provided over a multicast tree. For example, when a first UE (which is interested in MBMS session) with PDU session 1 has joined, the SMF may signal multicast addressing information to the 5G AN (e.g. base station) node (e.g., source IP address, multicast address, etc.). This multicast addressing information may correspond to the node from which the 5G AN (e.g. base station) should retrieve the MBMS data over N3. This node may be a dedicated UPF, such as UPF X 104X, or another node such as the first router 120 (which may be configured as a first hop IP multicast router). The 5G AN may thus use the received multicast addressing information to join the MBMS delivery over N3 and at the same time bind this MBMS service MB 1 delivery to the first UE and PDU session 1 to create an MB1 binding context. When the SMF indicates to the 5G AN (e.g. base station) that a second UE with PDU session 2 has joined the same MB1 service, the 5G AN (e.g. base station) may detect that it already receives MB1 data over N3 and can further update its MB1 binding context with the information for the second UE and the PDU session 2. As such, the 5G AN (e.g. base station) may use the already existing N3 data delivery to send the data towards UE2 over a radio bearer of the second UE (or SC-PTM bearer if relevant). In this example embodiments, the UPF sends the MBMS service data only once and the multicast tree manages any necessary duplication.

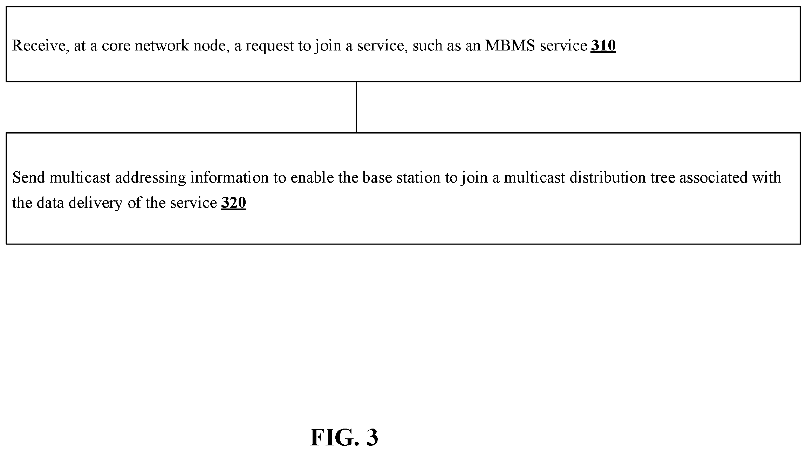

FIG. 3 depicts an example process for optimization of MBMS service delivery, in accordance with some example embodiments.

At 310, a network node may receive a request to join a service, such as an MBMS service. For example, a core network node, such as a UPF, an SMF, and/or other node, may receive a request from a UE. This request may be received via the control plane and/or the user plane. To illustrate further with reference to FIGs. 1 and 2, the first UE 102A may request, via the control plane, to receive the MBMS service identified by MS1(which in this example is the identifier for the MBMS service). Alternatively, the first UE 102A may request, via the user plane, the MBMS service for MS1 (e.g., via IGMP towards UPF1 which will in turn contact SMF1).

At 320, the network node may send, in order to process the request at 310, information to enable joining the service in a request message to an access network node. For example, a core network node, such as a UPF, an SMF, and/or other node, may, in order to process the request received at 310, send to a 5G AN (e.g. base station) serving the UE information in a request message, such as (e.g. UE context identifier and/or session identifier, multicast addressing information to enable the 5G AN (e.g. base station) to join a multicast distribution tree associated with the data delivery of the MBMS service. In some embodiments, 320 may be performed in the same or similar manner as noted above with respect to 154. In some embodiments, 320 may be performed in the same or similar manner as noted above with respect to 254.

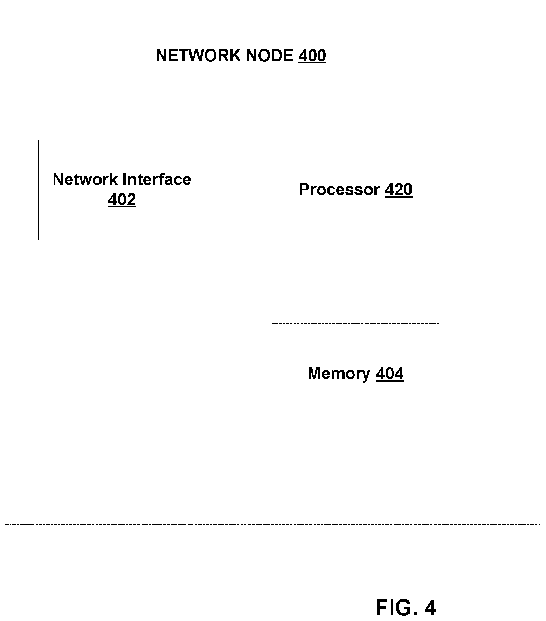

FIG. 4 depicts a block diagram of a network node 400, in accordance with some example embodiments. The network node 400 may be configured to provide one or more network side functions, such as a base station, UPF, SMF, router, and/or other network nodes.

The network node 400 may include a network interface 402, a processor 420, and a memory 404, in accordance with some example embodiments. The network interface 402 may include wired and/or wireless transceivers to enable access other nodes including base stations, a data network such as the Internet, and/or other nodes. The memory 404 may comprise volatile and/or non-volatile memory including program code, which when executed by at least one processor 420 provides, among other things, the processes disclosed herein with respect to the network node.

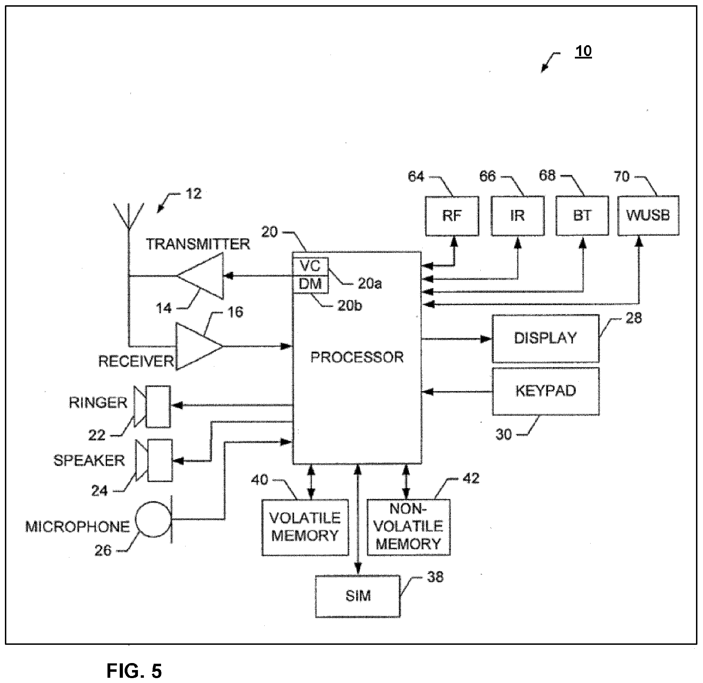

FIG. 5 illustrates a block diagram of an apparatus 10, in accordance with some example embodiments. The UEs disclosed herein may comprise or be comprised in apparatus 10.

The apparatus 10 may include at least one antenna 12 in communication with a transmitter 14 and a receiver 16. Alternatively transmit and receive antennas may be separate. The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise, processor 20 may be configured to control other elements of apparatus 10 by effecting control signaling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 5 as a single processor, in some example embodiments the processor 20 may comprise a plurality of processors or processing cores.

The apparatus 10 may be capable of operating with one or more air interface standards, communication protocols, modulation types, access types, and/or the like. Signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced, 5G, and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 5, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a Bluetooth^{™} (BT) transceiver 68 operating using Bluetooth^{™} wireless technology, a wireless universal serial bus (USB) transceiver 70, a Bluetooth^{™} Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), an eUICC, an UICC, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing operations disclosed herein. Alternatively or additionally, the apparatus may be configured to cause the operations disclosed herein with respect to the base stations/WLAN access points and network nodes including the UEs.

The memories may comprise an identifier, such as an international mobile equipment identification (IMEI) code, capable of uniquely identifying apparatus 10. The memories may comprise an identifier, such as an international mobile equipment identification (IMEI) code, capable of uniquely identifying apparatus 10. In the example embodiment, the processor 20 may be configured using computer code stored at memory 40 and/or 42 to the provide operations disclosed herein with respect to the UE.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, apparatus, or device, such as a computer or data processor circuitry, with examples depicted at FIG. 5, computer-readable medium may comprise a non-transitory computer-readable storage medium that may be any media that can contain or store the instructions for use by or in connection with an instruction execution system, apparatus, or device, such as a computer.

Without in any way limiting the scope, interpretation, or application of the claims appearing below, a technical effect of one or more of the example embodiments disclosed herein may be a reduction in resource usage over the network.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Other embodiments may be within the scope of the following claims. The term "based on" includes "based on at least." The use of the phase "such as" means "such as for example" unless otherwise indicated.

## Claims

1. An apparatus for a communication network, the apparatus comprising:
a session management function (106A, 106B) comprising:
means for receiving, from a user equipment (102A, 102B), a request to join a multicast, broadcast service; and
means for sending, a request to associate the user equipment (102A, 102B) with the multicast, broadcast service towards an access network node (110) serving the user equipment (102A, 102B), the request comprising an identifier of the multicast, broadcast service, a session identifier of a session of the user equipment (102A, 102B), and multicast addressing information comprising a source address comprising an address of a user plane function or a router that delivers data of the multicast, broadcast service to the access node (110) and/or a multicast address where the access network node (110) can access, via an N3 interface, the data of the multicast, broadcast service.

2. The apparatus of claim 1, wherein the request towards the access network node includes the identifier of the multicast, broadcast service, an identifier of a user equipment context of the user equipment (102A, 102B) and/or the session identifier of the PDU session of the user equipment (102A, 102B).

3. The apparatus of claim 1 or 2, wherein the session management function further comprises means for selecting and/or means for configuring the user plane function or the router to deliver the data of the multicast, broadcast service via the N3 interface to the access node (110).

4. An access network node (110) comprising:
means for receiving, from a session management function (106A, 106B), a request to associate a user equipment (102A, 102B) with a multicast, broadcast service, the request comprising an identifier of the multicast, broadcast service, a session identifier of a session of the user equipment (102B), and multicast addressing information comprising a source address comprising an address of a user plane function or a router that delivers data of the multicast, broadcast service to the access node (110) and/or a multicast address where the access network node (110) can access, via an N3 interface, the data of the multicast, broadcast service;
means for determining whether the access network node (110) receives, for another user equipment (102A), the data of the multicast, broadcast service based on the identifier of the multicast, broadcast service and the multicast addressing information; and
means for, based on the determining that the access network node (110) received, for the another user equipment (102A), the data of the multicast, broadcast service, joining the multicast broadcast service using the multicast addressing information .

5. The access network node (110) of claim 4, comprising means for binding at least one radio bearer of the access network node (110) to the user equipment (102B) to enable the delivery of the data of the multicast, broadcast service to the user equipment (102B) .

6. The access network node (110) of any of claims 4-5, wherein the access network node (110) comprises means for storing a context associated to the multicast, broadcast service which contains the multicast addressing information and at least one binding to an identifier of the another user equipment context and/or session identifier of a session of the another user equipment .

7. The access network node (110) of any of claims 4-6 wherein the access network node (110) is a base station of a mobile network and/or an access gateway function of a wireline network.

8. A method of a session management function (106A, 106B) of a communication network, the method comprising:
receiving, from a user equipment (102A, 102B), a request to join a multicast, broadcast service; and
sending, a request to associate the user equipment (102A, 102B) with the multicast, broadcast service towards an access network node (110) serving the user equipment (102A, 102B), the request comprising an identifier of the multicast, broadcast service, a session identifier of a session of the user equipment (102A, 102B), and multicast addressing information comprising a source address comprising an address of a user plane function or router that delivers data of the multicast, broadcast service to the access node (110) and/or a multicast address where the access network node (110) can access, via an N3 interface, the data of the multicast, broadcast service.

9. The method of claim 8, wherein the request towards the access network node includes the identifier of the multicast, broadcast service, an identifier of a user equipment context of the user equipment and/or the session identifier of the PDU session of the user equipment.

10. The method of claim 8 or claim 9, further comprising selecting and/or configuring the user plane function or the router to deliver the data of the multicast, broadcast service via the N3 interface to the access node (110).

11. A method of an access network node (110) of a communication network, the method comprising:
receiving a request comprising an identifier of a multicast, broadcast service, a session identifier of a session of a user equipment (102B), and multicast addressing information comprising a source address comprising an address of a user plane function or router that delivers data of the multicast, broadcast service to the access node (110) and/or a multicast address where the access network node (110) can access, via an N3 interface, the data of the multicast, broadcast service;
determining whether the access network node (110) receives, for another user equipment (102A), the data of the multicast, broadcast service based on the identifier of the multicast, broadcast service and the multicast addressing information; and
based on the determining that the access network node (110) receives, for the another user equipment (102A), the data of the multicast, broadcast service, joining the multicast broadcast service using the multicast addressing information.

12. The method of claim 11, comprising binding at least one radio bearer of the access network node (110) to the user equipment (102B) to enable the delivery of the data of the multicast, broadcast service to the user equipment (102B) .

13. The method of any of claims 11-12, comprising storing a context associated to the multicast, broadcast service which contains the multicast addressing information and at least one binding to an identifier of the another user equipment context and/or session identifier of a session of the another user equipment.

14. The method of any of claims 11-13, wherein the access network node (110) is a base station of a mobile network and/or an access gateway function of a wireline network.

15. A computer program comprising instructions, wherein when the computer program is executed by at least one processor of an apparatus, the apparatus is caused to perform all the steps of the method of any of claims 8-10.

16. A computer program comprising instructions, wherein when the computer program is executed by at least one processor of an apparatus, the apparatus is caused to perform all the steps of the method of any of claims 11-14

## Patentansprüche

1. Einrichtung für ein Kommunikationsnetzwerk, wobei die Einrichtung Folgendes umfasst:
eine Sitzungsverwaltungsfunktion (106A, 106B), die Folgendes umfasst:
Mittel zum Empfangen einer Anforderung zum Beitreten zu einem Multicast-, Broadcastdienst von einer Teilnehmereinrichtung (102A, 102B); und
Mittel zum Senden einer Anforderung zum Verknüpfen der Teilnehmereinrichtung (102A, 102B) mit dem Multicast-, Broadcastdienst an einen Zugangsnetzwerkknoten (110), der die Teilnehmereinrichtung (102A, 102B) bedient, wobei die Anforderung eine Kennung des Multicast-, Broadcastdienstes, eine Sitzungskennung einer Sitzung der Teilnehmereinrichtung (102A, 102B) und Multicastadressinformationen umfasst, die eine Quelladresse, die eine Adresse einer Benutzerebenenfunktion oder eines Routers, die bzw. der Daten des Multicast-, Broadcastdienstes an den Zugangsknoten (110) liefert, und/oder eine Multicastadresse umfassen, wo der Zugangsnetzwerkknoten (110) auf die Daten des Multicast-, Broadcastdienstes via eine N3-Schnittstelle zugreifen kann.

2. Einrichtung nach Anspruch 1, wobei die Anforderung beim Zugangsnetzwerkknoten die Kennung des Multicast-, Broadcastdienstes, eine Kennung eines Teilnehmereinrichtungskontextes der Teilnehmereinrichtung (102A, 102B) und/oder die Sitzungskennung der PDU-Sitzung der Teilnehmereinrichtung (102A, 102B) beinhaltet.

3. Einrichtung nach Anspruch 1 oder 2, wobei die Sitzungsverwaltungsfunktion ferner Mittel zum Auswählen und/oder Mittel zum Auslegen der Benutzerebenenfunktion oder des Routers zum Liefern der Daten des Multicast-, Broadcastdienstes via die N3-Schnittstelle an den Zugangsknoten (110) umfasst.

4. Zugangsnetzwerkknoten (110), der Folgendes umfasst:
Mittel zum Empfangen einer Anforderung zum Verknüpfen einer Teilnehmereinrichtung (102A, 102B) mit einem Multicast-, Broadcastdienst von einer Sitzungsverwaltungsfunktion (106A 106B), wobei die Anforderung eine Kennung des Multicast-, Broadcastdienstes, eine Sitzungskennung einer Sitzung der Teilnehmereinrichtung (102B) und Multicastadressinformationen umfasst, die eine Quelladresse, die eine Adresse einer Benutzerebenenfunktion oder eines Routers, die bzw. der Daten des Multicast-, Broadcastdienstes an den Zugangsknoten (110) liefert, und/oder eine Multicastadresse umfassen, wo der Zugangsnetzwerkknoten (110) auf die Daten des Multicast-, Broadcastdienstes via eine N3-Schnittstelle zugreifen kann;
Mittel zum Bestimmen, ob der Zugangsnetzwerkknoten (110) die Daten des Multicast-, Broadcastdienstes auf Basis der Kennung des Multicast-, Broadcastdienstes und der Multicastadressinformationen für eine andere Teilnehmereinrichtung (102A) empfängt; und
auf Basis des Bestimmens, dass der Zugangsnetzwerkknoten (110) die Daten des Multicast-, Broadcastdienstes für die andere Teilnehmereinrichtung (102A) empfangen hat, Mittel zum Beitreten zum Multicastbroadcastdienst unter Verwendung der Multicastadressinformationen.

5. Zugangsnetzwerkknoten (110) nach Anspruch 4, der Mittel zum Binden von mindestens einem Funkträger des Zugangsnetzwerkknotens (110) an die Teilnehmereinrichtung (102B) umfasst, um die Lieferung der Daten des Multicast-, Broadcastdienstes an die Teilnehmereinrichtung (102B) zu ermöglichen.

6. Zugangsnetzwerkknoten (110) nach einem der Ansprüche 4 bis 5, wobei der Zugangsnetzwerkknoten (110) Mittel zum Speichern eines Kontextes umfasst, der mit dem Multicast-, Broadcastdienst verknüpft ist und die Multicastadressinformationen und mindestens eine Bindung an eine Kennung des anderen Teilnehmereinrichtungskontextes und/oder eine Sitzungskennung einer Sitzung an die andere Teilnehmereinrichtung enthält.

7. Zugangsnetzwerkknoten (110) nach einem der Ansprüche 4 bis 6, wobei der Zugangsnetzwerkknoten (110) eine Basisstation eines Mobilfunknetzwerks und/oder eine Zugangsgatewayfunktion eines drahtgebundenen Netzwerks ist.

8. Verfahren einer Sitzungsverwaltungsfunktion (106A, 106B) eines Kommunikationsnetzwerks, wobei das Verfahren Folgendes umfasst:
Empfangen einer Anforderung zum Beitreten zu einem Multicast-, Broadcastdienst von einer Teilnehmereinrichtung (102A, 102B); und
Senden einer Anforderung zum Verknüpfen der Teilnehmereinrichtung (102A, 102B) mit dem Multicast-, Broadcastdienst an einen Zugangsnetzwerkknoten (110), der die Teilnehmereinrichtung (102A, 102B) bedient, wobei die Anforderung eine Kennung des Multicast-, Broadcastdienstes, eine Sitzungskennung einer Sitzung der Teilnehmereinrichtung (102A, 102B) und Multicastadressinformationen umfasst, die eine Quelladresse, die eine Adresse einer Benutzerebenenfunktion oder eines Routers, die bzw. der Daten des Multicast-, Broadcastdienstes an den Zugangsknoten (110) liefert, und/oder eine Multicastadresse umfassen, wo der Zugangsnetzwerkknoten (110) auf die Daten des Multicast-, Broadcastdienstes via eine N3-Schnittstelle zugreifen kann.

9. Verfahren nach Anspruch 8, wobei die Anforderung beim Zugangsnetzwerkknoten die Kennung des Multicast-, Broadcastdienstes, eine Kennung eines Teilnehmereinrichtungskontextes der Teilnehmereinrichtung und/oder die Sitzungskennung der PDU-Sitzung der Teilnehmereinrichtung beinhaltet.

10. Verfahren nach Anspruch 8 oder Anspruch 9, das ferner das Auswählen und/oder Auslegen der Benutzerebenenfunktion oder des Routers zum Liefern der Daten des Multicast-, Broadcastdienstes via die N3-Schnittstelle an den Zugangsknoten (110) umfasst.

11. Verfahren in einem Zugangsnetzwerkknoten (110) eines Kommunikationsnetzwerks, wobei das Verfahren Folgendes umfasst:
Empfangen einer Anforderung, die eine Kennung eines Multicast-, Broadcastdienstes, eine Sitzungskennung einer Sitzung einer Teilnehmereinrichtung (102B) und Multicastadressinformationen umfasst, die eine Quelladresse, die eine Adresse einer Benutzerebenenfunktion oder eines Routers umfassen, die bzw. der Daten des Multicast-, Broadcastdienstes an den Zugangsknoten (110) liefert, und/oder eine Multicastadresse umfassen, wo der Zugangsnetzwerkknoten (110) via eine N3-Schnittstelle auf die Daten des Multicast-, Broadcastdienstes zugreifen kann;
Bestimmen, ob der Zugangsnetzwerkknoten (110) die Daten des Multicast-, Broadcastdienstes auf Basis der Kennung des Multicast-, Broadcastdienstes und der Multicastadressinformationen für eine andere Teilnehmereinrichtung (102A) empfängt; und
auf Basis des Bestimmens, dass der Zugangsnetzwerkknoten (110) die Daten des Multicast-, Broadcastdienstes für die andere Teilnehmereinrichtung (102A) empfangen hat, Beitreten zum Multicastbroadcastdienst unter Verwendung der Multicastadressinformationen.

12. Verfahren nach Anspruch 11, das das Binden von mindestens einem Funkträger des Zugangsnetzwerkknotens (110) an die Teilnehmereinrichtung (102B) umfasst, um die Lieferung der Daten des Multicast-, Broadcastdienstes an die Teilnehmereinrichtung (102B) zu ermöglichen.

13. Verfahren nach einem der Ansprüche 11 bis 12, das das Speichern eines Kontextes umfasst, der mit dem Multicast-, Broadcastdienst verknüpft ist und die Multicastadressinformationen und mindestens eine Bindung an eine Kennung des anderen Teilnehmereinrichtungskontextes und/oder eine Sitzungskennung einer Sitzung an die andere Teilnehmereinrichtung enthält.

14. Verfahren nach einem der Ansprüche 11 bis 13, wobei der Zugangsnetzwerkknoten (110) eine Basisstation eines Mobilfunknetzwerks und/oder eine Zugangsgatewayfunktion eines Drahtleitungsnetzwerks ist.

15. Computerprogramm, das Anweisungen umfasst, wobei, wenn das Computerprogramm von mindestens einem Prozessor einer Einrichtung ausgeführt wird, die Einrichtung veranlasst wird, alle Schritte des Verfahrens nach einem der Ansprüche 8 bis 10 durchzuführen.

16. Computerprogramm, das Anweisungen umfasst, wobei, wenn das Computerprogramm von mindestens einem Prozessor einer Einrichtung ausgeführt wird, die Einrichtung veranlasst wird, alle Schritte des Verfahrens nach einem der Ansprüche 11 bis 14 durchzuführen.

## Revendications

1. Appareil pour un réseau de communication, l'appareil comprenant :
une fonction de gestion de session (106A, 106B) comprenant :
des moyens pour recevoir d'un équipement utilisateur (102A, 102B) une demande de rejoindre un service de diffusion-multidiffusion ; et
des moyens pour envoyer une demande d'associer l'équipement utilisateur (102A, 102B) au service de diffusion-multidiffusion vers un nœud de réseau d'accès (110) desservant l'équipement utilisateur (102A, 102B), la demande comprenant un identifiant du service de diffusion-multidiffusion, un identifiant de session d'une session de l'équipement utilisateur (102A, 102B) et des informations d'adressage de multidiffusion comprenant une adresse source comprenant une adresse d'une fonction de plan utilisateur ou d'un routeur qui fournit des données du service de diffusion-multidiffusion au nœud d'accès (110) et/ou une adresse multidiffusion par laquelle le nœud de réseau d'accès (110) peut accéder aux données du service de diffusion-multidiffusion via une interface N3.

2. Appareil selon la revendication 1, dans lequel la demande vers le nœud de réseau d'accès comporte l'identifiant du service de diffusion-multidiffusion, un identifiant d'un contexte d'équipement utilisateur de l'équipement utilisateur (102A, 102B) et/ou l'identifiant de session de la session PDU de l'équipement utilisateur (102A, 102B).

3. Appareil selon la revendication 1 ou 2, dans lequel la fonction de gestion de session comprend en outre des moyens pour sélectionner et/ou des moyens pour configurer la fonction de plan utilisateur ou le routeur pour fournir les données du service de diffusion-multidiffusion via l'interface N3 au nœud d'accès (110).

4. Nœud de réseau d'accès (110) comprenant :
des moyens pour recevoir d'une fonction de gestion de session (106A, 106B) une demande d'associer un équipement utilisateur (102A, 102B) à un service de diffusion-multidiffusion, la demande comprenant un identifiant du service de diffusion-multidiffusion, un identifiant de session d'une session de l'équipement utilisateur (102B) et des informations d'adressage de multidiffusion comprenant une adresse source comprenant une adresse d'une fonction de plan utilisateur ou d'un routeur qui fournit des données du service de diffusion-multidiffusion au nœud d'accès (110) et/ou une adresse multidiffusion par laquelle le nœud de réseau d'accès (110) peut accéder aux données du service de diffusion-multidiffusion via une interface N3 ;
des moyens pour déterminer si le nœud de réseau d'accès (110) reçoit les données du service de diffusion-multidiffusion pour un autre équipement utilisateur (102A) sur la base de l'identifiant du service de diffusion-multidiffusion et des informations d'adressage de multidiffusion ; et
des moyens pour, sur la base de la détermination de la réception par le nœud de réseau d'accès (110) des données du service de diffusion-multidiffusion pour cet autre équipement utilisateur (102A), se joindre au service de diffusion-multidiffusion en utilisant les informations d'adressage de multidiffusion.

5. Nœud de réseau d'accès (110) selon la revendication 4, comprenant des moyens pour lier au moins un support radio du nœud de réseau d'accès (110) à l'équipement utilisateur (102B) pour permettre la fourniture des données du service de diffusion-multidiffusion à l'équipement utilisateur (102B).

6. Nœud de réseau d'accès (110) selon l'une des revendications 4 et 5, dans lequel le nœud de réseau d'accès (110) comprend des moyens pour stocker un contexte associé au service de diffusion-multidiffusion qui contient les informations d'adressage de multidiffusion et au moins une liaison avec un identifiant de cet autre contexte d'équipement utilisateur et/ou un identifiant de session d'une session de cet autre équipement utilisateur.

7. Nœud de réseau d'accès (110) selon l'une des revendications 4 à 6, dans lequel le nœud de réseau d'accès (110) est une station de base d'un réseau mobile et/ou une fonction de passerelle d'accès d'un réseau filaire.

8. Procédé d'une fonction de gestion de session (106A, 106B) d'un réseau de communication, le procédé comprenant les étapes suivantes :
recevoir d'un équipement utilisateur (102A, 102B) une demande de rejoindre un service de diffusion-multidiffusion ; et
envoyer une demande d'associer l'équipement utilisateur (102A, 102B) au service de diffusion-multidiffusion vers un nœud de réseau d'accès (110) desservant l'équipement utilisateur (102A, 102B), la demande comprenant un identifiant du service de diffusion-multidiffusion, un identifiant de session d'une session de l'équipement utilisateur (102A, 102B) et des informations d'adressage de multidiffusion comprenant une adresse source comprenant une adresse d'une fonction de plan utilisateur ou d'un router qui fournit des données du service de diffusion-multidiffusion au nœud d'accès (110) et/ou une adresse multidiffusion par laquelle le nœud de réseau d'accès (110) peut accéder aux données du service de diffusion-multidiffusion via une interface N3.

9. Procédé selon la revendication 8, dans lequel la demande vers le nœud de réseau d'accès comporte l'identifiant du service de diffusion-multidiffusion, un identifiant d'un contexte d'équipement utilisateur de l'équipement utilisateur et/ou l'identifiant de session de la session PDU de l'équipement utilisateur.

10. Procédé selon la revendication 8 ou 9, comprenant en outre le fait de sélectionner et/ou de configurer la fonction de plan utilisateur ou le routeur pour fournir les données du service de diffusion-multidiffusion via l'interface N3 au nœud d'accès (110).

11. Procédé d'un nœud de réseau d'accès (110) d'un réseau de communication, le procédé comprenant les étapes suivantes :
recevoir une demande comprenant un identifiant d'un service de diffusion-multidiffusion, un identifiant de session d'une session d'un équipement utilisateur (102B) et des informations d'adressage de multidiffusion comprenant une adresse source comprenant une adresse d'une fonction de plan utilisateur ou d'un router qui fournit des données du service de diffusion-multidiffusion au nœud d'accès (110) et/ou une adresse multidiffusion par laquelle le nœud de réseau d'accès (110) peut accéder aux données du service de diffusion-multidiffusion via une interface N3 ;
déterminer si le nœud de réseau d'accès (110) reçoit les données du service de diffusion-multidiffusion pour un autre équipement utilisateur (102A) sur la base de l'identifiant du service de diffusion-multidiffusion et des informations d'adressage de multidiffusion ; et
sur la base de la détermination de la réception par le nœud de réseau d'accès (110) des données du service de diffusion-multidiffusion pour cet autre équipement utilisateur (102A), se joindre au service de diffusion-multidiffusion en utilisant les informations d'adressage de multidiffusion.

12. Procédé selon la revendication 11, comprenant le fait de lier au moins un support radio du nœud de réseau d'accès (110) à l'équipement utilisateur (102B) pour permettre la fourniture des données du service de diffusion-multidiffusion à l'équipement utilisateur (102B).

13. Procédé selon l'une des revendications 11 et 12, comprenant le fait de stocker un contexte associé au service de diffusion-multidiffusion qui contient les informations d'adressage de multidiffusion et au moins une liaison avec un identifiant de cet autre contexte d'équipement utilisateur et/ou un identifiant de session d'une session de cet autre équipement utilisateur.

14. Procédé selon l'une des revendications 11 à 13, dans lequel le nœud de réseau d'accès (110) est une station de base d'un réseau mobile et/ou une fonction de passerelle d'accès d'un réseau filaire.

15. Programme informatique comprenant des instructions, dans lequel, lorsque le programme informatique est exécuté par au moins un processeur d'un appareil, l'appareil est amené à effectuer toutes les étapes du procédé selon l'une des revendications 8 à 10.

16. Programme informatique comprenant des instructions, dans lequel, lorsque le programme informatique est exécuté par au moins un processeur d'un appareil, l'appareil est amené à effectuer toutes les étapes du procédé selon l'une des revendications 11 à 14.
